(19) Europäisches Patentamt
European Patent Office
Office européen des brevets

(11) **EP 4 123 620 B1**

(12) **EUROPÄISCHE PATENTSCHRIFT**

(45) Veröffentlichungstag und Bekanntmachung des Hinweises auf die Patenterteilung:
**14.05.2025   Patentblatt 2025/20**

(21) Anmeldenummer: **22184610.8**

(22) Anmeldetag: **13.07.2022**

(51) Internationale Patentklassifikation (IPC):
*G08G 1/16* (2006.01)      *G08G 1/0967* (2006.01)
*H04W 4/44* (2018.01)      *H04W 4/46* (2018.01)
*H04W 4/021* (2018.01)

(52) Gemeinsame Patentklassifikation (CPC):
**G08G 1/164; G08G 1/096716; G08G 1/096741;
G08G 1/096783; H04W 4/021; H04W 4/44;
H04W 4/46;** G08G 1/162

(54) **VERFAHREN, VORRICHTUNG UND COMPUTERPROGRAMM ZUR WEITERLEITUNG VON NACHRICHTENSEGMENTEN DURCH EINE STRASSENSEITIGE INFRASTRUKTUR**

METHOD, DEVICE AND COMPUTER PROGRAM FOR FORWARDING MESSAGE SEGMENTS THROUGH A ROADSIDE INFRASTRUCTURE

PROCÉDÉ, DISPOSITIF ET PROGRAMME INFORMATIQUE DE TRANSFERT DES SEGMENTS DE MESSAGE À TRAVERS UNE INFRASTRUCTURE ROUTIÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2021   DE 102021207755**

(43) Veröffentlichungstag der Anmeldung:
**25.01.2023   Patentblatt 2023/04**

(73) Patentinhaber: **Robert Bosch GmbH
70442 Stuttgart (DE)**

(72) Erfinder:
• **Hofmann, Frank
  31139 Hildesheim (DE)**
• **Fuchs, Hendrik
  31141 Hildesheim (DE)**
• **Schiegg, Florian Alexander
  31139 Hildesheim (DE)**
• **Llatser Marti, Ignacio
  31135 Hildesheim (DE)**

(56) Entgegenhaltungen:
WO-A1-2017/045139      DE-A1- 102008 009 330
DE-B3- 102016 207 608

**Beschreibung**

Stand der Technik

Die Erfindung geht aus von einem Verfahren, einer Vorrichtung und einem Computerprogramm zur Weiterleitung von Nachrichtensegmenten durch eine ortsgebundene Infrastruktur.

Kooperatives autonomes Fahren basiert auf Informationsaustausch zwischen autonomen Fahrzeugen und ortsgebundener Infrastruktur untereinander und miteinander. Nachrichten zum Informationsaustausch sollen möglichst zuverlässig und ohne zeitliche Verzögerung zwischen Verkehrsteilnehmern ausgetauscht werden.

In bestimmten Situationen ist es aufgrund physikalischer Gegebenheiten fehleranfällig oder unmöglich, Nachrichten direkt zwischen den Verkehrsteilnehmern auszutauschen. Ortsgebundene, insbesondere straßenseitige, Infrastruktur kann in diesen Situationen dazu eingesetzt werden, Nachrichten weiterzuleiten. Das Weiterleiten von Nachrichten erhöht die Kommunikationsreichweite und verbessert die Zuverlässigkeit durch redundante Übertragungen. Jedoch erhöht sich durch das Weiterleiten von Nachrichten die Kanallast im Kommunikationskanal, was wiederum die Kommunikationszuverlässigkeit verringern und die Latenz erhöhen kann. Es ist deshalb nicht immer möglich, auch bei hohem Kommunikationsaufkommen alle Nachrichten zuverlässig und mit möglichst geringer zeitlicher Verzögerung weiterzuleiten.

Das Dokument DE 10 2016 207 608 B3 offenbart ein Verfahren für eine Relay-Station für Fahrzeug-zu-Fahrzeug-Nachrichten. Hierbei wird eine Fahrzeug-zu-Fahrzeug-Nachricht basierend auf einer Relevanz der Nachricht für einen Empfänger gefiltert, wobei die Nachricht ausgefiltert und nicht weitergegeben wird, wenn sie für den Empfänger nicht relevant ist.

Das Dokument WO 2017/045139 A1 offenbart ein Verfahren zum Übertragen von Kommunikationsnachrichten. Hierbei wird eine Nachricht von einem ersten Gerät über einen Funkknoten an ein zweites Gerät in einem Bereich mit schwachem Funksignal übertragen.

Offenbarung der Erfindung

Das Verfahren, die Vorrichtung und das Computerprogramm gemäß den unabhängigen Ansprüchen verbessert die Kommunikation demgegenüber.

Das Verfahren zur Weiterleitung von Nachrichtensegmenten durch eine ortsgebundene Infrastruktureinrichtung, die dazu ausgebildet ist, Nachrichten in eine Mehrzahl von Sektoren zu senden, sieht vor, dass eine Eingangs-Nachricht eines Verkehrsteilnehmers von der Infrastruktureinrichtung empfangen wird, wobei eine Eingangs-Nachricht eines Verkehrsteilnehmers von der ortsgebundenen Infrastruktureinrichtung empfangen wird, wobei die Eingangs-Nachricht ein Nachrichtensegment oder mehrere Nachrichtensegmente umfasst, wobei entweder für wenigstens ein Nachrichtensegment wenigstens ein Sektor aus der Mehrzahl von Sektoren bestimmt wird, und von der ortsgebundenen Infrastruktureinrichtung eine Ausgangs-Nachricht, die das wenigstens eine Nachrichtensegment umfasst, in den wenigstens einen Sektor gesendet wird oder die Ausgangs-Nachricht nicht gesendet wird, falls kein Sektor bestimmt wurde, wobei mehrere Nachrichtensegmente von verschiedenen Eingangs-Nachrichten eines vorgegebenen Nachrichtentyps, die in denselben Sektor zu senden sind, insbesondere mittels Datenfusion, in eine Ausgangs-Nachricht zusammengefasst. Dadurch werden Nachrichtensegmente aggregiert, die entweder vom selben oder von verschiedenen Verkehrsteilnehmern stammen.

Jedes Nachrichtensegment wird in den Sektoren gesendet, in dem das Nachrichtensegment relevant ist. Das Weiterleiten von Nachrichtensegmenten in Sektoren, wo sie nicht relevant sind, wird vermieden. Dies reduziert das Kommunikationsaufkommen und erhöht die Zuverlässigkeit des Kommunikationskanals gegenüber einer Weiterleitung von Nachrichten ohne Relevanzprüfung. Unter einer ortsgebundenen Infrastruktureinrichtung kann eine stationäre, insbesondere eine straßenseitige Infrastruktureinrichtung verstanden werden.

Der wenigstens eine Sektor wird vorzugsweise abhängig von einer Position eines Infrastrukturelements, insbesondere eines Gebäudes, einer Fahrbahn, eines Verkehrsschildes, und/oder einem dynamischen Zustand des Verkehrsteilnehmers in einer Umgebung der ortsgebundenen Infrastruktureinrichtung bestimmt wird, in den ein Senden der Eingangs-Nachricht durch den Verkehrsteilnehmer fehleranfällig oder unmöglich ist. Das bedeutet, die relevanten Sektoren werden abhängig vom dynamischen Zustand, beispielsweise einer Position, einer Orientierung, und/oder einer Geschwindigkeit des Verkehrsteilnehmers, bestimmt. Dadurch wird das Kommunikationsaufkommen auf Sektoren reduziert, die mit direkter Kommunikation durch den Verkehrsteilnehmer schwer oder nicht erreichbar sind.

Vorzugsweise wird eine Anordnung des Infrastrukturelements relativ zum Verkehrsteilnehmer mit einem Umgebungsmodell bestimmt, das eine Karte der Umgebung der ortsgebundenen Infrastruktureinrichtung umfasst. Dies ermöglicht es, die relevanten Sektoren besonders zuverlässig zu bestimmen.

Vorzugsweise wird eine Position des Verkehrsteilnehmers mit einem Sensor der Infrastruktureinrichtung erfasst oder in einer Nachricht insbesondere vom Verkehrsteilnehmer empfangen und in das Umgebungsmodell gespeichert. Das heißt, mit anderen Worten, die mit dem Sensor der Infrastruktureinrichtung erfasste oder in einer Nachricht insbesondere vom Verkehrsteilnehmer an die Infrastruktureinrichtung übermittelte Position des Verkehrsteilnehmers wird in das Umgebungsmodell gespeichert. Dadurch werden die relevanten Sektoren besonders zuverlässig bestimmbar.

Vorzugsweise wird eine Relevanz des Sektors für das Nachrichtensegment bestimmt, wobei das Nachrichtensegment in den Sektor gesendet wird, wenn die Relevanz des Sektors für das Nachrichtensegment eine Bedingung erfüllt, insbesondere einen Schwellwert überschreitet, und wobei das Nachrichtensegment anderenfalls nicht in den Sektor gesendet wird. Dies reduziert das Kommunikationsaufkommen im Sektor signifikant.

Vorzugsweise wird insbesondere abhängig von einer Entfernung eines Empfängers vom Verkehrsteilnehmer und abhängig von einer Position eines Infrastrukturelements, insbesondere eines Gebäudes, einer Fahrbahn, eines Verkehrsschildes, einem dynamischen Zustand des Verkehrsteilnehmers und/oder einem dynamischen Zustand des Empfängers in einer Umgebung der ortsgebundenen Infrastruktureinrichtung eine Empfangswahrscheinlichkeit dafür bestimmt wird, dass die Nachricht vom Empfänger empfangbar ist, wobei die Relevanz des Sektors für das Nachrichtensegment abhängig von der Empfangswahrscheinlichkeit bestimmt wird. Dadurch wird das Nachrichtensegment nur weitergeleitet, wenn der Verkehrsteilnehmer den Empfänger nicht mit ausreichend hoher Wahrscheinlichkeit direkt erreichen kann. Dies reduziert das Kommunikationsaufkommen empfängerspezifisch.

Vorzugsweise wird insbesondere abhängig von einer Zeit bis zu einem Zusammenstoß eines Empfängers mit dem Verkehrsteilnehmer, einem Abstand zu diesem oder einem Typ des Verkehrsteilnehmers und/oder des Empfängers, ein möglicher Nutzen dafür bestimmt wird, dass das Nachrichtensegment vom Empfänger empfangen wird, wobei die Relevanz des Sektors für das Nachrichtensegment abhängig vom möglichen Nutzen bestimmt wird. Dies vermeidet eine Reduktion des Kommunikationsaufkommens empfängerspezifisch, wenn das das Nachrichtensegment z.B. für die Sicherheit des Empfängers hochrelevant ist.

Die Relevanz des Sektors wird vorzugsweise abhängig von einer insbesondere gewichteten Differenz oder Division zwischen dem möglichen Nutzen und der Empfangswahrscheinlichkeit bestimmt.

Die Differenz oder Division wird vorzugsweise abhängig von einem möglichen Nutzen und einer Empfangswahrscheinlichkeit bestimmt, die für wenigstens einen weiteren Empfänger, der sich momentan im Sektor befindet, bestimmt wurde.

Vorzugsweise wird einschließlich des Nachrichtensegments eine Mehrzahl von Nachrichtensegmenten bestimmt, deren Relevanz für den Sektor die Bedingung erfüllt, wobei die Ausgangs-Nachricht zumindest das Nachrichtensegment und ein weiteres Nachrichtensegment aus der Mehrzahl von Nachrichtensegmenten umfasst oder wobei die Ausgangs-Nachricht zumindest ein zum Nachrichtensegment redundantes weiteres Nachrichtensegment aus der Mehrzahl von Nachrichtensegmenten nicht umfasst oder wobei die Ausgangs-Nachricht zumindest ein weiteres Nachrichtensegment aus der Mehrzahl von Nachrichtensegmenten nicht umfasst, das einen ähnlichen oder denselben Inhalt wie das Nachrichtensegment umfasst. Dadurch wird das Kommunikationsaufkommen weiter reduziert.

Vorzugsweise wird aus mehreren Nachrichtensegmenten von verschiedenen Eingangs-Nachrichten eines vorgegebenen Nachrichtentyps, die in denselben Sektor zu senden sind, eines in der Ausgangs-Nachricht versendet, wobei die anderen verworfen werden. Dadurch wird das Kommunikationsaufkommen weiter reduziert.

Die Vorrichtung zur Weiterleitung von Nachrichtensegmenten durch eine ortsgebundene Infrastruktur, die dazu ausgebildet ist, Nachrichten in eine Mehrzahl von Sektoren zu senden, ist ausgebildet, insbesondere eingerichtet, das Verfahren auszuführen.

Das System zur Weiterleitung von Nachrichtensegmenten umfasst eine Mehrzahl von derartigen Vorrichtungen, die untereinander mit einer insbesondere kabelgebundenen Datenleitung verbunden und dazu ausgebildet sind, Eingangs-Nachrichten untereinander über die Datenleitung auszutauschen, wobei eine an einer der Vorrichtungen eingehende Eingangs-Nachricht über die Datenleitung an wenigstens eine andere der Vorrichtungen weitergeleitet wird. Dadurch sind über die ortsgebundene Infrastruktureinrichtung, die die Eingangs-Nachricht vom Verkehrsteilnehmer empfängt auch Empfänger erreichbar, die außerhalb einer Funkreichweite dieser ortsgebundenen Infrastruktureinrichtung sind.

Das Computerprogramm umfasst computerlesbare Instruktionen, bei deren Ausführung durch einen Computer oder eine vorstehend beschriebene Vorrichtung das erfindungsgemäße Verfahren ausgeführt wird.

Weitere vorteilhafte Ausführungsformen ergeben sich aus der folgenden Beschreibung und der Zeichnung. In der Zeichnung zeigt:

Fig. 1 eine Nachricht,
Fig. 2 eine Vorrichtung zur Weiterleitung von Nachrichtensegmenten,
Fig. 3 ein Sequenzdiagramm einer Kommunikation,
Fig. 4 ein Szenario zur Weiterleitung von Nachrichtensegmenten.

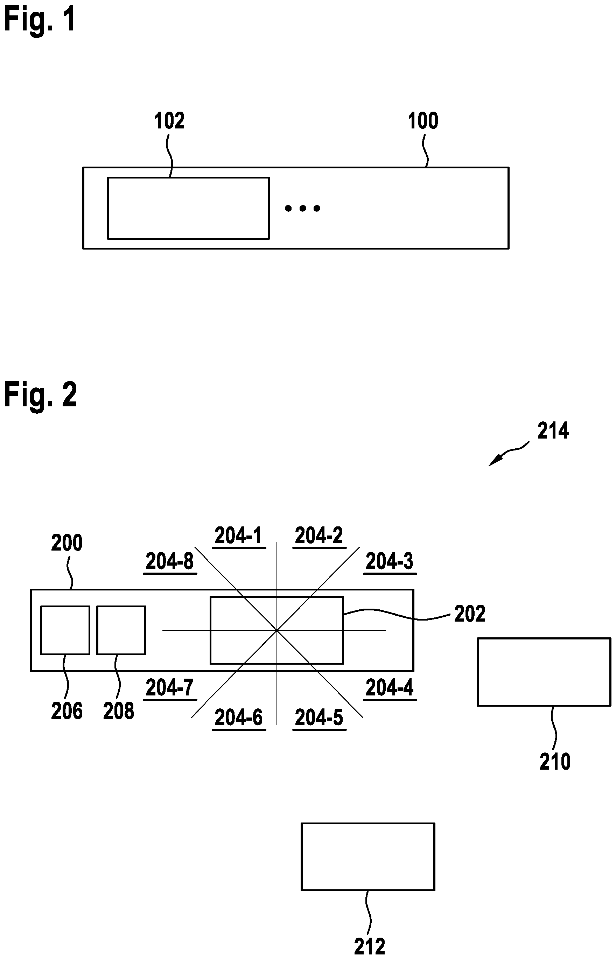

In Figur 1 ist eine Nachricht 100 schematisch dargestellt, die ein Nachrichtensegment 102 umfasst. Es können auch mehrere Nachrichtensegmente in der Nachricht 100 vorgesehen sein. Die Nachricht 100 kann eine Eingangs-Nachricht oder eine Ausgangs-Nachricht sein.

In Figur 2 ist eine Vorrichtung 200 zur Weiterleitung von Nachrichtensegmenten und eine ortsgebundene Infrastruktur 202 schematisch dargestellt. Im Beispiel umfasst die ortsgebundene Infrastruktur 202 die Vorrichtung 200. Die ortsgebundene Infrastruktur 202 ist dazu ausgebildet, Nachrichten in eine Mehrzahl von Sektoren zu senden. Bevorzugt ist die ortsgebundene Infrastruktur 202 eine straßenseitige Infrastruktur 202. Im Beispiel sind acht Sektoren 204-1, 204-2, 204-3, 204-4, 204-5, 204-6, 204-7, 204-8 dargestellt. Es können mehr oder weniger Sektoren vorgesehen sein.

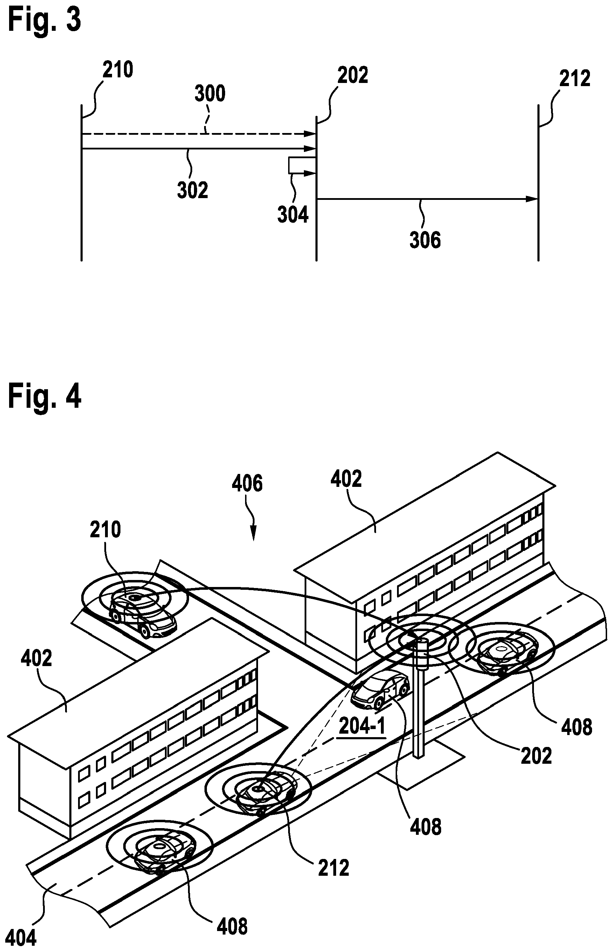

Die Vorrichtung 200 umfasst einen Prozessor 206 und einen Speicher 208. Die Vorrichtung 200 ist ausgebildet, ein im Folgenden mit Bezug auf Figur 3 beschriebenes Verfahren auszuführen. Der Speicher 208 umfasst im Beispiel computerlesbare Instruktionen, bei deren Ausführung durch den Prozessor 206 das Verfahren abläuft. Es kann auch eine verteilte Rechnerarchitektur mit einer Vielzahl von Prozessoren und/oder Speichern vorgesehen sein.

Die Kommunikation erfolgt im Beispiel für Fahrerinformation oder Warnung im 5.9 GHz Frequenzband als V2X gemäß des Standards IEEE 802.11p bekannt in USA als DSRC und in Europa als ITS-G5. Es kann beispielweise auch eine Kommunikation gemäß IEEE 802.11bd vorgesehen sein, oder gemäß 3GPP Spezifikation C-V2X oder 5G New Radio (NR) V2X Release 16. NR V2X.

Die ortsgebundene Infrastruktur 202 weist im Beispiel sektorspezifische Antennen auf, die ausgebildet sind, die Ausgangs-Nachricht im Verfahren in einen der Sektoren oder in mehrere der Sektoren zu senden.

Die sektorspezifischen Antennen sind ausgebildet, die Eingangs-Nachricht insbesondere von einem Verkehrsteilnehmer 210 oder einer anderen (in Figur 2 nicht dargestellten) ortsgebundenen Infrastruktur 202 zu empfangen. Eingangs-Nachricht bezeichnet in diesem Kontext eine Nachricht, die vom Verkehrsteilnehmer 210 gesendet wird.

Ein Empfänger 212, der sich in einem der Sektoren befindet, ist ausgebildet, die Ausgangs-Nachricht zu empfangen. Ausgangs-Nachricht bedeutet in diesem Kontext eine Nachricht, die von der ortsgebundenen Infrastruktur 202 gesendet wird.

Der Empfänger 212 ist im Beispiel zudem dazu ausgebildet, die Eingangs-Nachricht, d.h. die vom Verkehrsteilnehmer 210 gesendete Nachricht, zu empfangen.

Ob und wie gut der Empfänger 212 die Eingangs-Nachricht oder die Ausgangs-Nachricht empfangen kann, hängt von einer Umgebung 214 ab, in der sich der Empfänger 212, der Verkehrsteilnehmer 210 und die ortsgebundene Infrastruktur 202 befinden, und davon, wie diese zueinander angeordnet sind.

Das Verfahren zur Weiterleitung von Nachrichtensegmenten sieht vor, dass die ortsgebundene Infrastruktureinrichtung 202 dazu ausgebildet ist, Nachrichten in eine Mehrzahl von Sektoren, beispielsweise die acht Sektoren 204-1, 204-2, 204-3, 204-4, 204-5, 204-6, 204-7, 204-8, zu senden.

Das Verfahren umfasst optional einen Schritt 300. Im Schritt 300 wird die Position des Verkehrsteilnehmers 210 in einer Nachricht vom Verkehrsteilnehmer 210 empfangen. Es kann stattdessen auch vorgesehen sein, dass die Position mit einem Sensor der ortsgebundenen Infrastruktureinrichtung 202 erfasst wird. Es kann stattdessen auch vorgesehen sein, dass die Position mit einem anderen Sensor erfasst und in einer Nachricht an die ortsgebundenen Infrastruktureinrichtung 202 übertragen wird. Beispielsweise wird diese Nachricht von einem anderen Fahrzeug, das den Verkehrsteilnehmer 210 erfasst hat, übertragen werden.

Der Schritt 300 kann wiederholt ausgeführt werden. Damit ist die ortsgebundenen Infrastruktureinrichtung 202 beispielsweise während eines Zeitintervalls, in dem der Verkehrsteilnehmer 210 in der Nähe der Infrastruktureinrichtung 202 ist, über die Position des Verkehrsteilnehmers 210 informiert.

Das Verfahren umfasst einen Schritt 302. Im Schritt 302 wird eine Eingangs-Nachricht des Verkehrsteilnehmers 210 von der Infrastruktureinrichtung 202 empfangen. Es kann vorgesehen sein, dass die Position des Verkehrsteilnehmers 210 in der Eingangs-Nachricht enthalten ist und die Schritte 300 und 302 zusammen stattfinden.

Die Eingangs-Nachricht ist beispielsweise wie für die Nachricht 100 beschrieben aufgebaut. Die Eingangs-Nachricht umfasst ein Nachrichtensegment oder mehrere Nachrichtensegmente.

Anschließend wird ein Schritt 304 ausgeführt.

Im Schritt 304 wird für das Nachrichtensegment ein Sektor aus der Mehrzahl von Sektoren bestimmt. Es kann vorgesehen sein, dass mehrere Sektoren aus der Mehrzahl von Sektoren bestimmt werden.

In Figur 4 ist ein Beispiel für ein Szenario dargestellt, in dem ein Senden in den Sektor 204-1 fehleranfällig oder unmöglich ist.

Der Sektor 204-1 wird beispielsweise abhängig von einer Position eines Infrastrukturelements, insbesondere eines Gebäudes 402, einer Fahrbahn 404, eines Verkehrsschildes, und/oder einer Position des Verkehrsteilnehmers 210 in einer Umgebung 406 der ortsgebundenen Infrastruktureinrichtung 202 bestimmt, in den ein Senden der Eingangs-Nachricht durch den Verkehrsteilnehmer 210 fehleranfällig oder unmöglich ist. In Figur 4 sind auch andere Verkehrsteilnehmer 408 dargestellt. Diese können mögliche andere Empfänger sein.

Im Beispiel wird eine Anordnung des Infrastrukturelements relativ zum Verkehrsteilnehmer 210 mit einem Umgebungsmodell bestimmt, das eine Karte der Umgebung der ortsgebundenen Infrastruktur 202 umfasst.

Im Beispiel wird insbesondere abhängig von einer Entfernung des Empfängers 212 vom Verkehrsteilnehmer 210 eine Empfangswahrscheinlichkeit dafür bestimmt, dass die Nachricht vom Empfänger empfangbar ist.

Im Beispiel wird insbesondere abhängig von einer Zeit bis zu einem möglichen Zusammenstoß des Empfängers 212 mit dem Verkehrsteilnehmer 210 ein möglicher Nutzen dafür bestimmt, dass das Nachrichtensegment an den Empfänger 212 gesendet wird.

Im Beispiel wird eine Relevanz des Sektors für das Nachrichtensegment bestimmt. Es kann vorgesehen sein, dass mehrere Nachrichtensegmente vorliegen und die Relevanz des Sektors für diese bestimmt wird. Die Relevanz des Sektors für das Nachrichtensegment wird im Beispiel abhängig von der Empfangswahrscheinlichkeit und abhängig vom möglichen Nutzen bestimmt. Es kann auch vorgesehen sein, die Relevanz des Sektors abhängig von der Empfangswahrscheinlichkeit und unabhängig vom möglichen Nutzern zu bestimmen. Es kann auch vorgesehen sein, die Relevanz des Sektors abhängig vom möglichen Nutzen und unabhängig von der Empfangswahrscheinlichkeit zu bestimmen.

Es kann vorgesehen sein, dass die Relevanz des Sektors abhängig von einer insbesondere gewichteten Differenz oder Division zwischen dem möglichen Nutzen und der Empfangswahrscheinlichkeit bestimmt wird. Es kann vorgesehen sein, dass die Differenz oder Division abhängig von möglichen Nutzen und der Empfangswahrscheinlichkeit bestimmt wird, die für wenigstens einen weiteren Empfänger 408, der sich momentan im Sektor befindet, bestimmt wurde.

Beispielsweise wird für eine Mehrzahl Nachrichtensegmente i und eine Mehrzahl Empfänger j eine jeweilige Relevanz $R_{i,j}$ mit einer jeweiligen Empfangswahrscheinlichkeit $P_{i,j}$ einem jeweiligen möglichen Nutzen $B_{i,j}$.

Beispielweise wird je Nachrichtensegment i und Empfänger j der mögliche Nutzen $B_{i,j}$ als umgekehrt proportional zu einer Zeit bis zur Kollision zwischen einem Bereich, der für das Nachrichtensegment i relevant ist, und dem Empfänger j bestimmt. Der Bereich ist im Beispiel als das Gebiet definiert, über welches das Nachrichtensegment eine Information hat. Dies kann ein Gebiet sein, in dem sich ein erkanntes Objekt befindet oder ein Gebiet, in dem sich eine Trajektorie des erkannten Objekts befindet.

Im Beispiel wird die Zeit bis zur Kollision (Time To Collision, TTC) bestimmt, als die Zeit, bis zu der Empfänger aufgrund seines aktuellen dynamischen Status erstmals in den Bereich eindringt. Dynamischer Status bedeutet in diesem Kontext beispielsweise eine Position, Fahrtrichtung, Geschwindigkeit, Beschleunigung und/oder Giergeschwindigkeit des Empfängers j.

Je früher ein Empfänger j in den Bereich eindringt, desto größer ist der ist im Beispiel der mögliche Nutzen $B_{i,j}$.

Es kann, insbesondere in dem Fall, dass eine Standardabweichung nach einer Sensordatenfusion größer als Null ist, auch eine Schätzung dieser Zeit, insbesondere eines schlechtmöglichsten Falls, vorgesehen sein.

Der mögliche Nutzen $B_{i,j}$ kann auch abhängig von einem Abstand zwischen dem Bereich und dem Empfänger j bestimmt werden. Der mögliche Nutzen $B_{i,j}$ kann auch abhängig von einem Typ des sendenden Verkehrsteilnehmers und/oder des Empfängers j bestimmt werden. Beispielsweise wird einem insbesondere schnellen Fahrzeug ein höherer möglicher Nutzen $B_{i,j}$

zugeordnet, als einen Fußgänger. Der mögliche Nutzen $B_{i,j}$ kann auch abhängig von einem Abstand des sendenden Verkehrsteilnehmers und eines diesem am nächsten befindlichen Verkehrsteilnehmers (oder der TTC zwischen beiden) bestimmt werden. Der mögliche Nutzen $B_{i,j}$ kann auch als Kombination dieser Faktoren bestimmt werden.

Beispielsweise wird je Nachrichtensegment i und Empfänger j die Wahrscheinlichkeit $P_{i,j}$ abhängig davon bestimmt, ob es eine Line-Of-sight zwischen diesen gibt, oder nicht. Es kann auch vorgesehen sein, dass die Wahrscheinlichkeit $P_{i,j}$ abhängig von einer Auslastung eines Kommunikationskanals an der Position des Empfängers j bestimmt wird. Die Auslastung wird beispielsweise durch Information über momentan verwendete Kommunikationskanäle oder Empfangsbestätigungsnachrichten vom Empfänger j oder anderen Kommunikationsteilnehmern bestimmt.

Die Relevanz $R_{i,j}$ wird beispielsweise als Funktion mit positiver Korrelation zum geschätzten möglichen Nutzen $B_{i,j}$ und negativer Korrelation zur

Empfangswahrscheinlichkeit $P_{i,j}$ bestimmt. Beispielsweise wird die Relevanz $R_{i,j}$ bestimmt als:

$$R_{i,j} = w_1\, B_{i,j} - w_2 P_{i,j}$$

oder als:

$$R_{i,j} = B_{i,j}{}^{w_1}/P_{i,j}{}^{w_2}$$

wobei $w_1$ und $w_2$ positive Gewichtsfaktoren sind.

Diese Gewichtsfaktoren ermöglichen es, eine relative Wichtigkeit des Nutzens und der Wahrscheinlichkeit des Empfangs zu berücksichtigen. Ein größerer Wert von $w_1$ bewirkt gegenüber einem kleineren Wert von $w_1$ und/oder $w_2$ mehr Übertragungen von Nachrichtensegmenten, die für Verkehrsteilnehmer relevant sind welche sich Nahe am sendenden Verkehrsteilnehmer befinden. Ein größerer Wert von $w_2$ bewirkt gegenüber einem kleineren Wert von $w_2$ und/oder $w_1$ mehr Übertragungen von Nachrichtensegmenten an weiter vom sendenden Verkehrsteilnehmer entfernte Empfänger, da die Wahrscheinlichkeit des Empfangs größeres Gewicht hat.

Es kann vorgesehen sein, die Relevanz einer Nachrichtensegment für sämtliche Verkehrsteilnehmer, die für einen Sektor i relevant sind, zusammenzufassen $R_i = \Sigma R_{i,j}$ und mit einem Schwellwert $R_{th}$ zu vergleichen. Der Schwellwert $R_{th}$ kann abhängig von Faktoren, z.B. Straßentopologie an ortsgebunden Infrastruktur 202, Verkehrsdichte im Bereich oder Auslastung des Kommunikationskanals bestimmt werden. Die Straßentopologie kann beispielsweise durch das Vorhandensein einer Kreuzung oder einer Autobahnauffahrt definiert sein.

Der Schwellwert $R_{th}$ kann mit einem Algorithmus für Maschinenlernen bestimmt werden, der die zuvor beschriebenen Parameter verwendet und darauf trainiert ist, eine Verkehrssicherheit oder -effizienz, die von der ortsgebundenen Infrastruktur 202 gemessen wird, zu optimieren. Beispielsweise wird in einem Szenario mit einem hohen Risiko eines Zusammenstoßes ein niedriger Schwellwert $R_{th}$ verwendet und der Schwellwert $R_{th}$ vergrößert, wenn die Auslastung des Kommunikationskanals steigt.

Beispielsweise wird der Sektor als relevanter Sektor für ein Nachrichtensegment erkannt, wenn $R_i > R_{th}$.

Das Verfahren kann vorsehen, das relevante Sektoren für die Mehrzahl Nachrichtensegmente i bestimmt wird, und die Nachrichtensegmente, die für den Sektor relevant sind, in einer Ausgangs-Nachricht zusammengefasst und gesendet werden.

Anschließend wird ein Schritt 306 ausgeführt.

Im Schritt 306 wird von der Infrastruktureinrichtung 202 eine Ausgangs-Nachricht, die das Nachrichtensegment umfasst, in den Sektor gesendet.

Im Beispiel wird das Nachrichtensegment in den Sektor gesendet, wenn die Relevanz $R_i$ des Sektors für das Nachrichtensegment eine Bedingung erfüllt, insbesondere den Schwellwert $R_{th}$ überschreitet. Anderenfalls wird das Nachrichtensegement im Beispiel nicht in den Sektor gesendet.

Es kann vorgesehen sein, dass einschließlich des Nachrichtensegments eine Mehrzahl von Nachrichtensegmenten bestimmt wird, deren Relevanz für den Sektor die Bedingung erfüllt. Die Nachrichtensegmente können vom gleichen Sender oder von unterschiedlichen Sendern gesendet worden sein. Es kann vorgesehen sein, dass die Ausgangs-Nachricht in diesem Fall zumindest das Nachrichtensegment und ein weiteres Nachrichtensegment aus der Mehrzahl von Nachrichtensegmenten umfasst.

Es kann vorgesehen sein, dass die Ausgangs-Nachricht in diesem Fall zumindest ein zum Nachrichtensegment redundantes weiteres Nachrichtensegment aus der Mehrzahl von Nachrichtensegmenten nicht umfasst. Es kann vorgesehen sein, dass zwei oder mehr redundante Nachrichtensegmente in einem neuen Nachrichtensegment z.B. mittels Datenfusion kombiniert werden.

Es kann vorgesehen sein, dass die Ausgangs-Nachricht in diesem Fall die Ausgangs-Nachricht zumindest ein weiteres Nachrichtensegment aus der Mehrzahl von Nachrichtensegmenten nicht umfasst, das einen ähnlichen oder denselben Inhalt wie das Nachrichtensegment umfasst. Es kann vorgesehen sein, dass zwei oder mehr ähnliche Nachrichtensegmente in einem neuen Nachrichtensegment z.B. mittels Datenfusion kombiniert werden.

Es kann vorgesehen sein, Nachrichtensegmente, die entweder vom selben oder von verschiedenen Verkehrsteilnehmern stammen, zu aggregieren. Das Verfahren sieht beispielsweise vor, mehrere Nachrichtensegmente von verschiedenen Eingangs-Nachrichten eines vorgegebenen Nachrichtentyps, die in denselben Sektor zu senden sind, insbesondere mittels Datenfusion, in eine Ausgangs-Nachricht zusammenzufassen.

Es kann vorgesehen sein, das Kommunikationsaufkommen weiter zu reduzieren, indem aus mehreren Nachrichtensegmenten von verschiedenen Eingangs-Nachrichten eines vorgegebenen Nachrichtentyps, die in denselben Sektor zu senden sind, eines in der Ausgangs-Nachricht versendet wird, wobei die anderen verworfen werden.

Zur Erhöhung der Reichweite, kann ein System zur Weiterleitung von Nachrichtensegmenten vorgesehen sein das System eine Mehrzahl von Vorrichtungen 200 umfasst.

Die Vorrichtungen 200 sind untereinander mit einer Datenleitung verbunden. Die Datenleitung kann kabelgebunden sein. Die Vorrichtungen 200 sind ausgebildet, Eingangs-Nachrichten untereinander über die Datenleitung auszutauschen.

Im Beispiel wird eine an einer der Vorrichtungen 200 eingehende Eingangs-Nachricht über die Datenleitung an wenigstens eine andere der Vorrichtungen 200 weitergeleitet.

Vorzugsweise verbindet die Datenleitung Vorrichtungen, die in zueinander benachbarten ortsgebundenen Infrastruktureinrichtungen 202 vorgesehen sind.

**Patentansprüche**

1. Verfahren zur Weiterleitung von Nachrichtensegmenten durch eine ortsgebundene Infrastruktureinrichtung (202), die dazu ausgebildet ist, Nachrichten in eine Mehrzahl von Sektoren (204-1, ..., 204-8) zu senden, wobei eine Eingangs-Nachricht eines Verkehrsteilnehmers (210) von der ortsgebundenen Infrastruktureinrichtung (202) empfangen wird (302), wobei die Eingangs-Nachricht ein Nachrichtensegment oder mehrere Nachrichtensegmente umfasst, wobei entweder für wenigstens ein Nachrichtensegment wenigstens ein Sektor aus der Mehrzahl von Sektoren (204-1, ..., 204-8) bestimmt wird (304), und von der ortsgebundenen Infrastruktureinrichtung (202) eine Ausgangs-Nachricht, die das wenigstens eine Nachrichtensegment umfasst, in den wenigstens einen Sektor gesendet wird (306) oder die Ausgangs-Nachricht nicht gesendet wird, falls kein Sektor bestimmt wurde, **dadurch gekennzeichnet, dass** mehrere Nachrichtensegmente von verschiedenen Eingangs-Nachrichten eines vorgegebenen Nachrichtentyps, die in denselben Sektor zu senden sind, insbesondere mittels Datenfusion, in eine Ausgangs-Nachricht zusammengefasst werden.

2. Verfahren nach Anspruch 1, **dadurch gekennzeichnet, dass** der wenigstens eine Sektor abhängig von einer Position eines Infrastrukturelements, insbesondere eines Gebäudes (402), einer Fahrbahn (404), eines Verkehrsschildes, und/oder einem dynamischen Zustand des Verkehrsteilnehmers (210) in einer Umgebung (406) der ortsgebundenen Infrastruktureinrichtung (202) bestimmt wird, in den ein Senden der Eingangs-Nachricht durch den Verkehrsteilnehmer (210) fehleranfällig oder unmöglich ist.

3. Verfahren nach Anspruch 2, **dadurch gekennzeichnet, dass** eine Anordnung des Infrastrukturelements relativ zum Verkehrsteilnehmer (210) mit einem Umgebungsmodell bestimmt wird (304), das eine Karte der Umgebung der ortsgebundenen Infrastruktureinrichtung (202) umfasst.

4. Verfahren nach Anspruch 3, **dadurch gekennzeichnet, dass** eine Position des Verkehrsteilnehmers (210) mit einem Sensor der ortsgebundenen Infrastruktureinrichtung (202) erfasst oder in einer Nachricht insbesondere vom Verkehrsteilnehmer (210) empfangen und in das Umgebungsmodell gespeichert wird (300).

5. Verfahren nach einem der vorherigen Ansprüche, **dadurch gekennzeichnet, dass** eine Relevanz des Sektors für das Nachrichtensegment bestimmt wird (304), wobei das Nachrichtensegment in den Sektor gesendet wird (306), wenn die Relevanz des Sektors für das Nachrichtensegment eine Bedingung erfüllt, insbesondere einen Schwellwert überschreitet, und wobei das Nachrichtensegment anderenfalls nicht in den Sektor gesendet wird.

6. Verfahren nach Anspruch 5, **dadurch gekennzeichnet, dass** insbesondere abhängig von einer Entfernung eines Empfängers (212) vom Verkehrsteilnehmer (210) und abhängig von einer Position eines Infrastrukturelements, insbesondere eines Gebäudes (402), einer Fahrbahn (404), eines Verkehrsschildes, einem dynamischen Zustand des Verkehrsteilnehmers (210) und/oder einem dynamischen Zustand des Empfängers (212) in einer Umgebung (406) der ortsgebundenen Infrastruktureinrichtung (202) eine Empfangswahrscheinlichkeit dafür bestimmt wird, dass die Nachricht vom Empfänger (212) empfangbar ist, wobei die Relevanz des Sektors für das Nachrichtensegment abhängig von der Empfangswahrscheinlichkeit bestimmt wird (304).

7. Verfahren nach Anspruch 5 oder 6, **dadurch gekennzeichnet, dass** insbesondere abhängig von einer Zeit bis zu einem Zusammenstoß eines Empfängers (212) mit dem Verkehrsteilnehmer (210), einem Abstand zu diesem oder einem Typ des Verkehrsteilnehmers (210) und/oder des Empfängers (212), ein möglicher Nutzen dafür bestimmt wird, dass das Nachrichtensegment vom Empfänger (212) empfangen wird, wobei die Relevanz des Sektors für das Nachrichtensegment abhängig vom möglichen Nutzen bestimmt wird (304).

8. Verfahren nach Anspruch 7, **dadurch gekennzeichnet, dass** die Relevanz des Sektors abhängig von einer insbesondere gewichteten Differenz oder Division zwischen dem möglichen Nutzen und der Empfangswahrscheinlichkeit bestimmt wird.

9. Verfahren nach Anspruch 8, **dadurch gekennzeichnet, dass** die Differenz oder Division abhängig von einem möglichen Nutzen und einer Empfangswahrscheinlichkeit bestimmt wird, die für wenigstens einen weiteren Empfänger (408), der sich momentan im Sektor befindet, bestimmt wurde.

10. Verfahren nach einem der vorherigen Ansprüche, **dadurch gekennzeichnet, dass** einschließlich des Nachrichtensegments eine Mehrzahl von Nachrichtensegmenten bestimmt wird, deren Relevanz für den Sektor die Bedingung erfüllt (304), wobei die Ausgangs-Nachricht zumindest das Nachrichtensegment und ein weiteres Nachrichtensegment aus der Mehrzahl von Nachrichtensegmenten umfasst oder wobei die Ausgangs-Nachricht zumindest ein zum Nachrichtensegment redundantes weiteres Nachrichtensegment aus der Mehrzahl von Nachrichtensegmenten nicht umfasst oder wobei die Ausgangs-Nachricht zumindest ein weiteres Nachrichtensegment aus der Mehrzahl von Nachrichtensegmenten nicht umfasst, das einen ähnlichen oder denselben Inhalt wie das Nachrichtensegment umfasst.

11. Verfahren nach einem der vorherigen Ansprüche, **dadurch gekennzeichnet, dass** aus mehreren Nachrichtensegmenten von verschiedenen Eingangs-Nachrichten eines vorgegebenen Nachrichtentyps, die in denselben Sektor zu senden sind, eines in der Ausgangs-Nachricht versendet wird, wobei die anderen verworfen werden.

12. Vorrichtung (200) zur Weiterleitung von Nachrichtensegmenten durch eine ortsgebundene Infrastruktur (202), die dazu ausgebildet ist, Nachrichten in eine Mehrzahl von Sektoren (204-1, ..., 204-8) zu senden, **dadurch gekennzeichnet, dass** die Vorrichtung (200) ausgebildet ist, das Verfahren nach einem der Ansprüche 1 bis 11 auszuführen.

13. System zur Weiterleitung von Nachrichtensegmenten, **dadurch gekennzeichnet, dass** das System eine Mehrzahl von Vorrichtungen (200) nach Anspruch 12 umfasst, die untereinander mit einer insbesondere kabelgebundenen Datenleitung verbunden und dazu ausgebildet sind, Eingangs-Nachrichten untereinander über die Datenleitung auszutauschen, wobei eine an einer der Vorrichtungen (200) eingehende Eingangs-Nachricht über die Datenleitung an wenigstens eine andere der Vorrichtungen (200) weitergeleitet wird.

14. Computerprogramm, **dadurch gekennzeichnet, dass** das Computerprogramm computerlesbare Instruktionen umfasst, bei deren Ausführung durch einen Computer oder eine Vorrichtung (200) nach Anspruch 12 ein Verfahren nach einem der Ansprüche 1 bis 11 ausgeführt wird.

**Claims**

1. Method for forwarding message segments by way of a fixed infrastructure facility (202) designed to send messages to a plurality of sectors (204-1, ..., 204-8), wherein an incoming message from a road user (210) is received by the fixed infrastructure facility (202) (302), the incoming message comprising a message segment or multiple message segments, wherein either at least one sector from the plurality of sectors (204-1, ..., 204-8) is determined for at least one message segment (304), and the fixed infrastructure facility (202) sends an outgoing message comprising the at least one message segment to the at least one sector (306), or the outgoing message is not sent if no sector has been determined, **characterized in that** multiple message segments of different incoming messages of a predefined message type which are to be sent to the same sector are combined into an outgoing message, in particular by means of data fusion.

2. Method according to Claim 1, **characterized in that** the at least one sector to which sending of the incoming message by the road user (210) is prone to errors or impossible is determined on the basis of a position of an infrastructure element, in particular a building (402), a road (404), a traffic sign and/or a dynamic state of the road user (210) in an environment (406) of the fixed infrastructure facility (202).

3. Method according to Claim 2, **characterized in that** an arrangement of the infrastructure element relative to the road user (210) is determined using an environmental model (304) comprising a map of the environment of the fixed infrastructure facility (202).

4. Method according to Claim 3, **characterized in that** a position of the road user (210) is detected using a sensor of the fixed infrastructure facility (202) or received in a message in particular from the road user (210) and stored in the environmental model (300).

5. Method according to one of the preceding claims, **characterized in that** a relevance of the sector to the message segment is determined (304), the message segment being sent to the sector (306) if the relevance of the sector to the message segment satisfies a condition, in particular exceeds a threshold value, otherwise the message segment is not sent to the sector.

6. Method according to Claim 5, **characterized in that** in particular a distance of a receiver (212) from the road user (210) and a position of an infrastructure element, in particular a building (402), a road (404), a traffic sign, a dynamic state of the road user (210) and/or a dynamic state of the receiver (212) in an environment (406) of the fixed infrastructure facility (202) are taken as a basis for determining a reception probability of the message being receivable by the receiver (212), the relevance of the sector to the message segment being determined on the basis of the reception probability (304).

7. Method according to Claim 5 or 6, **characterized in that** in particular a time before a collision between a receiver (212) and the road user (210), a distance from said road user or a type of the road user (210) and/or of the receiver (212) is taken as a basis for determining a possible benefit of the message segment being received by the receiver (212), the relevance of the sector to the message segment being determined on the basis of the possible benefit (304).

8. Method according to Claim 7, **characterized in that** the relevance of the sector is determined on the basis of an in particular weighted difference or division between the possible benefit and the reception probability.

9. Method according to Claim 8, **characterized in that** the difference or division is determined on the basis of a possible benefit and a reception probability which has been determined for at least one further receiver (408) currently located in the sector.

10. Method according to one of the preceding claims, **characterized in that**, including the message segment, a plurality of message segments whose relevance to the sector satisfies the condition are determined (304), wherein the outgoing message comprises at least the message segment and a further message segment from the plurality of message segments or wherein the outgoing message does not comprise at least one further message segment from the plurality of message segments which is redundant with respect to the message segment or wherein the outgoing message does not comprise at least one further message segment from the plurality of message segments which comprises a content similar to or the same as that of the message segment.

11. Method according to one of the preceding claims, **characterized in that**, of multiple message segments of different incoming messages of a predefined message type which are to be sent to the same sector, one is sent in the outgoing message, the others being discarded.

12. Device (200) for forwarding message segments by way of a fixed infrastructure (202) designed to send messages to a plurality of sectors (204-1, ..., 204-8), **characterized in that** the device (200) is designed to carry out the method according to one of Claims 1 to 11.

13. System for forwarding message segments, **characterized in that** the system comprises a plurality of devices (200) according to Claim 12 which are connected to each other by an in particular wired data line and are designed to exchange incoming messages with each other via the data line, an incoming message which arrives at one of the devices (200) being forwarded to at least one other of the devices (200) via the data line.

14. Computer program, **characterized in that** the computer program comprises computer-readable instructions which, when executed by a computer or a device (200) according to Claim 12, result in a method according to one of Claims 1 to 11 being carried out.

**Revendications**

1. Procédé permettant de retransmettre des segments de message par une installation d'infrastructure locale (202) qui est réalisée pour émettre des messages dans une pluralité de secteurs (204-1, ..., 204-8), dans lequel un message entrant d'un usager de la route (210) est reçu (302) par l'installation d'infrastructure locale (202), le message entrant comprenant un segment de message ou plusieurs segments de message, dans lequel soit au moins un secteur parmi la pluralité de secteurs (204-1, ..., 204-8) est déterminé (304) pour au moins un segment de message, et un message sortant qui comprend ledit au moins un segment de message est émis par l'installation d'infrastructure locale (202) dans ledit au moins un secteur (306), soit le message sortant n'est pas émis si aucun secteur n'a été déterminé, **caractérisé en ce que** plusieurs segments de message de différents messages entrants d'un type de message prédéfini qui sont à envoyer dans le même secteur sont regroupés, en particulier au moyen d'une fusion de données, en un message sortant.

2. Procédé selon la revendication 1, **caractérisé en ce que** ledit au moins un secteur est déterminé en fonction d'une position d'un élément d'infrastructure, en particulier d'un bâtiment (402), d'une chaussée (404), d'un panneau routier et/ou d'un état dynamique de l'usager de la route (210), dans un environnement (406) de l'installation d'infrastructure locale (202) dans lequel un envoi du message entrant par l'usager de la route (210) est sujet à des erreurs, voire impossible.

3. Procédé selon la revendication 2, **caractérisé en ce qu'**un agencement de l'élément d'infrastructure par rapport à l'usager de la route (210) est déterminé (304) à l'aide d'un modèle d'environnement qui comprend une carte de l'environnement de l'installation d'infrastructure locale (202).

4. Procédé selon la revendication 3, **caractérisé en ce qu'**une position de l'usager de la route (210) est détectée par un capteur de l'installation d'infrastructure locale (202) ou est reçue dans un message, en particulier de l'usager de la route (210), et est stockée (300) dans le modèle d'environnement.

5. Procédé selon l'une quelconque des revendications précédentes, **caractérisé en ce qu'**une pertinence du secteur pour l'élément de message est déterminée (304), dans lequel le segment de message est envoyé (306) dans le secteur si la pertinence du secteur satisfait une condition pour le segment de message, en particulier dépasse une valeur seuil, et dans lequel sinon le segment de message n'est pas envoyé dans le secteur.

6. Procédé selon la revendication 5, **caractérisé en ce qu'**une probabilité de réception est déterminée, en particulier en fonction d'une distance d'un récepteur (212) de l'usager de la route (210) et en fonction d'une position d'un élément d'infrastructure, en particulier d'un bâtiment (402), d'une chaussée (404), d'un panneau routier, d'un état dynamique de l'usager de la route (210) et/ou d'un état dynamique du récepteur (212) dans un environnement (406) de l'installation d'infrastructure locale (202), pour savoir si le message peut être reçu par le récepteur (212), dans lequel la pertinence du secteur pour le segment de message est déterminée (304) en fonction de la probabilité de réception.

7. Procédé selon la revendication 5 ou 6, **caractérisé en ce qu'**une utilité possible est déterminée, en particulier en fonction d'un délai jusqu'à une collision d'un récepteur (212) avec l'usager de la route (210), d'une distance par rapport à celui-ci ou d'un type de l'usager de la route (210) et/ou du récepteur (212), pour que le segment de message soit reçu par le récepteur (212), la pertinence du secteur pour le segment de message étant déterminée (304) en fonction de l'utilité possible.

8. Procédé selon la revendication 7, **caractérisé en ce que** la pertinence du secteur est déterminée en fonction d'une différence, en particulier pondérée, ou d'une division entre l'utilité possible et la probabilité de réception.

9. Procédé selon la revendication 8, **caractérisé en ce que** la différence ou la division est déterminée en fonction d'une utilité possible et d'une probabilité de réception qui a été déterminée pour au moins un autre récepteur (408) qui se trouve actuellement dans le secteur.

10. Procédé selon l'une quelconque des revendications précédentes, **caractérisé en ce qu'**une pluralité de segments de message, y compris le segment de message, est déterminée dont la pertinence pour le secteur satisfait (304) la condition, dans lequel le message sortant comprend au moins le segment de message et un autre segment de message parmi la pluralité de segments de message, ou dans lequel le message sortant ne comprend pas au moins un autre segment de message redondant par rapport au segment de message parmi la pluralité de segments de message, ou dans lequel le message sortant ne comprend pas au moins un autre segment de message parmi la pluralité de segments de message, qui comprend un contenu similaire ou identique à celui du segment de message.

11. Procédé selon l'une quelconque des revendications précédentes, **caractérisé en ce que** parmi plusieurs segments de message provenant de différents messages entrants d'un type de message prédéfini qui sont à envoyer dans le même secteur, l'un est envoyé dans le message sortant alors que les autres sont rejetés.

12. Dispositif (200) permettant de retransmettre des segments de message par une infrastructure locale (202) qui est réalisée pour envoyer des messages dans une pluralité de secteurs (204-1, ..., 204-8), **caractérisé en ce que** le dispositif (200) est réalisé pour exécuter le procédé selon l'une quelconque des revendications 1 à 11.

13. Système permettant de retransmettre des segments de message, **caractérisé en ce que** le système comprend une pluralité de dispositifs (200) selon la revendication 12 qui sont reliés ensemble par une ligne de données, en particulier câblée, et qui sont réalisés pour échanger des messages entrants entre eux par l'intermédiaire de la ligne de donnée, dans lequel un message entrant arrivant au niveau d'un des dispositifs (200) est retransmis par l'intermédiaire de la ligne de données à au moins un autre des dispositifs (200).

14. Programme informatique, **caractérisé en ce que** le programme informatique comprend des instructions lisibles par ordinateur, à l'exécution desquelles par un ordinateur ou un dispositif (200) selon la revendication 12, un procédé selon l'une quelconque des revendications 1 à 11 est exécuté.

**Fig. 1**

102    100

· · ·

**Fig. 2**

214

200

204-1  204-2
204-8          204-3
                    202

206  208
204-7          204-4
    204-6  204-5

210

212

# Fig. 3

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016207608 B3
- WO 2017045139 A1